# EUROPÄISCHE PATENTANMELDUNG

(11) **EP 2 453 179 A1**
(43) Veröffentlichungstag der Anmeldung: **16.05.2012**
(21) Anmeldenummer: 10191235.0
(22) Anmeldetag: 15.11.2010
(51) Int. Cl.: F24D 11/00, F24D 17/00, F24H 1/18, F24H 9/02, F24H 9/12

(54) **Modulares Warmwassersystem**

(71) Anmelder: Roth Werke GmbH, 35232 Dautphetal (DE)
(72) Erfinder:
(74) Vertreter: Rohmann, Michael

(57) **Zusammenfassung**

Modulares Warmwassersystem, insbesondere Warmwassersystem zum Erwärmen und Speichern von Wasser in einem Gebäude, wobei das Warmwasserspeichersystem ein Gehäuse aufweist, in welchem Gehäuse zumindest ein Wärmemodul und zumindest zwei Speichermodule aufgenommen sind. Das Wärmemodul enthält eine Wärmequelle zum Erwärmen des Wassers und zumindest eine Regeleinheit. Die Speichermodule weisen jeweils einen Warmwasserspeicher auf, wobei in den Warmwasserspeichern unabhängig voneinander und vorzugsweise bei verschiedenen Temperaturen das von der Wärmequelle erwärmte Wasser speicherbar ist. Das Warmwassersystem weist ein Rohrleitungssystem auf, mit dem die Regeleinheit, die Wärmequelle und die Warmwasserspeicher miteinander verbunden sind. Die Regeleinheit ist derart steuerbar, dass den Warmwasserspeichern durch das Rohrleitungssystem unabhängig voneinander das erwärmte Wasser zuführbar und/oder entnehmbar ist.

## Beschreibung

Die Erfindung betrifft ein modulares Warmwassersystem, insbesondere Warmwassersystem zum Erwärmen und Speichern von Wasser in einem Gebäude.

Systeme zum Erwärmen und Speichern von Wasser in einem Gebäude sind aus der Praxis in verschiedenen Ausführungsformen bekannt. Bei diesen Systemen wird beispielsweise ein Heizbrenner zum Erwärmen des Wassers eingesetzt, und das erwärmte Wasser wird einem Boiler zugeführt. In dem Boiler wird dann das erwärmte Wasser gespeichert und zu einem späteren Zeitpunkt einem Verbraucher zugeführt. Weiterhin ist es bekannt, in einem Warmwasserspeicher oder Boiler ein Heizungselement vorzusehen, mit dem in den Boiler gefördertes kaltes Wasser erwärmbar ist. Nachteilig bei den aus der Praxis bekannten Systemen ist jedoch der niedrige Wirkungsgrad, wodurch ein unvorteilhafter Energieverbrauch beim Erwärmen und Vorrätighalten des erwärmten Wassers hervorgerufen wird. Die Energieeffizienz ist also verbesserungsbedürftig. Außerdem ist die Hygiene bezüglich der Trinkwassererwärmung verbesserungsbedürftig. In der Regel erfolgt die Bevorratung von erwärmtem Trinkwasser in so genannten Kombispeichern, in denen ein relativ großes Volumen bei höheren, nicht exakt einstellbaren Temperaturen vorrätig gehalten wird. Aufgrund der problematischen Temperatureinstellung werden die für die Bevorratung von Trinkwasser vorgegebenen hygienischen Bedingungen nicht eingehalten, so dass die Qualität des Trinkwassers beeinträchtigt wird. Zur Vermeidung der hygienischen Beeinträchtigung erfolgt die Trinkwassererwärmung daher zunehmend über externe Einrichtungen in Trinkwasserstationen mit geringem Inhalt.

Daher liegt der Erfindung das technische Problem zugrunde, ein Warmwassersystem anzugeben, mit dem energieoptimiert und hygienisch Wasser erwärmbar ist, warmes Wasser speicherbar sowie einem Verbraucher zuführbar ist.

Zur Lösung des technischen Problems lehrt die Erfindung ein modulares Warmwassersystem, insbesondere Warmwassersystem zum Erwärmen und Speichern von Wasser in einem Gebäude, wobei das Warmwassersystem ein Gehäuse aufweist, in welchem Gehäuse zumindest ein Wärmemodul und zumindest zwei Speichermodule aufgenommen sind, wobei das Wärmemodul eine Wärmequelle zum Erwärmen des Wassers und zumindest eine Regeleinheit enthält, wobei die Speichermodule jeweils einen Warmwasserspeicher aufweisen, wobei in den Warmwasserspeichern unabhängig voneinander und vorzugsweise bei verschiedenen Temperaturen das von der Wärmequelle erwärmte Wasser speicherbar ist, wobei das Warmwassersystem ein Rohrleitungssystem aufweist, mit dem die Regeleinheit, die Wärmequelle und die Warmwasserspeicher miteinander verbunden sind und wobei die Regeleinheit derart steuerbar ist, dass den Warmwasserspeichern durch das Rohrleitungssystem unabhängig voneinander das erwärmte Wasser zuführbar und/oder entnehmbar ist.

Es liegt im Rahmen der Erfindung, dass das Gehäuse quaderförmig bzw. im Wesentlichen quaderförmig ausgebildet ist. Grundsätzlich ist es möglich, dass das Gehäuse mehrteilig und vorzugsweise aus mehreren quaderförmigen Speichermodulen und Wärmemodulen zusammengesetzt ausgebildet ist. Gemäß einer Ausführungsform weist das Gehäuse einheitliche Oberflächen auf.

Vorteilhafterweise ist die Regeleinheit mit der Maßgabe steuerbar, dass der Wärmequelle kaltes Wasser zuführbar ist. Es liegt im Rahmen der Erfindung, dass das kalte Wasser aus einem beispielsweise öffentlichen Versorgungssystem, einem Heizungssystem oder einem Trinkwassersystem in einem Gebäude entnehmbar ist. Gemäß einer Ausführungsform ist dem Warmwassersystem erwärmtes Wasser zuführbar, das außerhalb des modularen Warmwassersystems erwärmt ist. Grundsätzlich liegt es im Rahmen der Erfindung, dass der Wärmequelle und/oder Regeleinheit in den Warmwasserspeichern gelagertes Wasser zugeführt wird, das empfohlenermaßen mit der Wärmequelle erwärmbar ist und bevorzugt zu den Warmwasserspeichern zurückgeführt bzw. recycliert wird. Es liegt im Rahmen der Erfindung, dass in einem Wärmespeicher erwärmtes Trinkwasser oder erwärmtes Wasser zum Erwärmen von Trinkwasser und in einem anderen Wärmespeicher erwärmtes Heizungswasser gespeichert ist. Der Wärmespeicher, der erwärmtes Wasser zum Erwärmen von Trinkwasser vorrätig hält, wird im Rahmen der Erfindung als Trinkwasserspeicher bezeichnet. Der andere Wärmespeicher, der erwärmtes Heizungswasser speichert, wird auch als Heizungsspeicher bezeichnet. Als Wärmequelle kann beispielsweise zumindest eine Wärmequelle aus der Gruppe "Wärmepumpe, Gasbrenner, Ölbrenner, Standheizgerät, Wärmetauscher" eingesetzt werden. Gemäß einer vorteilhaften Ausführungsform sind in den Warmwasserspeichern keine Heizelemente angeordnet bzw. sind die Warmwasserspeicher heizelementfrei ausgebildet.

Es hat sich als zweckmäßig herausgestellt, dass den jeweiligen Warmwasserspeichern erwärmtes Wasser zuführbar ist, wobei in den jeweiligen Warmwasserspeichern Wasser mit einem Temperaturniveau vorrätig haltbar ist. Vorzugsweise sind die Temperaturniveaus in den Warmwasserspeichern verschieden bzw. unterschiedlich. Gemäß einer anderen Ausführungsform weisen die Warmwasserspeicher gleiche bzw. ungefähr gleiche Temperaturniveaus auf.

Vorzugsweise weist das Wärmemodul eine Fördereinrichtung auf, mit der Wasser zu den Warmwasserspeichern förderbar ist und/oder den Warmwasserspeichern entnehmbar ist. Vorteilhafterweise ist die Fördereinrichtung eine Pumpe, mit der Wasser zweckmäßigerweise innerhalb des erfindungsgemäßen modularen Wassersystems im Kreis förderbar ist und/oder mit der empfohlenermaßen Wasser aus einem von dem modularen Warmwassersystem unabhängigen Versorgungssystems in das modulare Warmwassersystem einbringbar ist.

Gemäß einer vorteilhaften Ausführungsform weist das Wärmemodul zumindest einen Wärmetauscher auf, mit dem Wärme vorzugsweise von einem mit einem Solarthermiemodul erwärmten Wärmeträgermedium auf das Wasser übertragbar bzw. tauschbar ist. Es hat sich bewährt, dass beispielsweise durch ein Solarthermiemodul gewonnene Wärme mit einem Wärmeträgermedium transportiert wird. Das Wärmeträgermedium ist beispielsweise eine Sole, die im Wesentlichen aus Wasser und einem Frostschutzmittel besteht. Der Wärmetauscher in dem Wärmemodul gewährleistet eine Trennung eines Wärmeträgermediumkreislaufes von dem in dem Warmwassersystem gehandhabten Wasser. Grundsätzlich ist es möglich, dass dem Wärmetauscher ein Wärmeträgermedium einer beliebigen, vorzugsweise außerhalb des modularen Warmwassersystems angeordneten Wärmequelle zuführbar ist.

Gemäß einer bevorzugten Ausführungsform weisen die Speichermodule jeweils einen dem jeweiligen Wärmespeicher zugeordneten Isoliermantel auf und empfohlenermaßen ist das Wärmemodul in einem Wärmemodulgehäuse angeordnet, wobei der Isoliermantel und das Wärmemodulgehäuse zur Ausbildung des Gehäuses miteinander verbunden sind. Es liegt im Rahmen der Erfindung, dass der Isoliermantel den Warmwasserspeicher vollständig bzw. im Wesentlichen vollständig umschließt. Zweckmäßigerweise ist der Isoliermantel quaderförmig bzw. ungefähr quaderförmig ausgebildet. Gemäß einer vorteilhaften Ausführungsform ist das Wärmemodulgehäuse quaderförmig ausgestaltet, wobei in einer bevorzugten Ausführungsform ein Aggregat aus der Regeleinheit, dem Wärmetauscher und der Fördereinrichtung in einem Förderabschnitt bzw. in einem Förderkasten angeordnet sind. Es ist möglich, dass die Wärmequelle einen Heizungsabschnitt bildet und in einem Heizungskasten angeordnet ist. Vorteilhafterweise ist der Förderkasten auf dem Heizungskasten angeordnet, wobei die Querschnitte des Förderkastens und des Heizungskastens identisch bzw. im Wesentlichen identisch sind. Zweckmäßigerweise bilden der Förderkasten und der Heizungskasten das Wärmemodulgehäuse. Gemäß einer Ausführungsform weist das Wärmemodul einen tragenden Rahmen auf, in dem in dem Wärmemodul angeordnete Komponenten gehalten werden bzw. haltbar sind. Es empfiehlt sich, dass der Rahmen mit einer vorzugsweise geräuschdämmenden Umhüllung verkleidet ist. Gemäß einer bevorzugten Ausführungsform ist die Umhüllung des Wärmemoduls von dem Isoliermantel des Wärmespeichers verschieden.

Vorzugsweise ist der Isoliermantel aus einem aufgeschäumten Kunststoff und bevorzugt aus einem expandierten Polystyrolschaum gefertigt. Es liegt im Rahmen der Erfindung, dass der Isoliermantel aus einem wärmeisolierenden Material gefertigt ist und empfohlenermaßen den Wärmespeicher stabilisiert. Mit anderen Worten übernimmt der Isoliermantel vorteilhafterweise eine statische Funktion. Gemäß einer weiteren Ausführungsform ist auf dem Wärmespeicher ein Zusatzmantel aufgebracht, der als Latentwärmespeicher ausgebildet ist. Zweckmäßigerweise ist der Latentwärmespeicher zwischen dem Wärmespeicher und dem Isoliermantel angeordnet. Der Latentwärmespeicher umfasst ein Latentwärmematerial, das beispielsweise Paraffin ist.

Gemäß einer Ausführungsform sind die Warmwasserspeicher jeweils als zweckmäßigerweise rotationssymmetrische Kunststoffbehälter ausgebildet, wobei die Kunststoffbehälter vorzugsweise eine Verstärkungsschicht aufweisen. Vorteilhafterweise ist die Verstärkungsschicht bevorzugt durch Umwickeln bzw. Umhüllen der Kunststoffbehälter mit einem Faserverbundmaterial erzeugt. Es liegt im Rahmen der Erfindung, dass die Kunststoffbehälter kesselförmig ausgebildet sind. Die Kunststoffbehälter weisen jeweils einen zylinderförmigen Abschnitt auf, dessen Stirnseiten kugelhauben- bzw. kalottenartig ausgebildet sind. Gemäß einer bevorzugten Ausführungsform sind die Kunststoffbehälter in den jeweiligen Speichermodulen derart angeordnet, dass die Längsachsen der zylinderförmigen Abschnitte vertikal bzw. quer zu einem Untergrund orientiert sind. Die kugelhaubenartig geformten Stirnseiten bilden einen Deckel bzw. ein Kopfteil und einen Boden bzw. ein Fußteil.

Es liegt im Rahmen der Erfindung, dass die Kunststoffbehälter im Wesentlichen bzw. vollständig aus einem thermoplastischen Kunststoff, vorzugsweise einem Polyolefin und besonders bevorzugt aus Polypropylen bestehen. Eine besonders bevorzugte Ausführungsform der Erfindung ist dadurch gekennzeichnet, dass die Kunststoffbehälter durch Blasformen oder durch Rotationsformen hergestellt sind. Nach einer bevorzugten Ausgestaltung der Erfindung sind die Kunststoffbehälter auf ihren Außenoberflächen mit einer Verstärkungsschicht versehen. Bei dem Faserverbundmaterial handelt es sich vorzugsweise um ein Faser-Kunststoff-Verbundmaterial. Faser-Kunststoff-Verbundmaterial meint hier auch, dass Fasern bzw. Verstärkungsfasern in eine Kunststoffmatrix und insbesondere in eine Matrix aus einem thermoplastischen Kunststoff eingebettet sind. Zweckmäßigerweise handelt es sich bei den Fasern um zumindest eine Faserart aus der Gruppe "Glasfasern, Kohlenstofffasern, Aramidfasern, Kunststofffasern, Metallfasern". Gemäß einer Ausführungsvariante der Erfindung wird das Faserverbundmaterial vor dem Umwickeln bzw. Umhüllen der Kunststoffbehälter erwärmt, so dass beim Umwickeln bzw. Umhüllen der einzelnen Kunststoffbehälter der thermoplastische Kunststoff des Faserverbundmaterials auf die Kunststoffbehälter aufgeschmolzen wird. Zweckmäßigerweise sind die Kunststoffbehälter durch das Faserverbundmaterial und den Isoliermantel mit der Maßgabe stabilisiert, dass die Kunststoffbehälter druckfest bis zumindest 3 bar sind.

Gemäß einer besonders bevorzugten Ausführungsform weisen die Warmwasserspeicher jeweils zumindest eine Anschlusseinheit und vorzugsweise zwei Anschlusseinheiten auf. Es empfiehlt sich, dass die Warmwasserspeicher jeweils eine kopfteilseitige Anschlusseinheit und eine fußteilseitige Anschlusseinheit aufweisen. Empfohlenermaßen weist ein Warmwasserspeicher lediglich zwei Anschlusseinheiten auf. Es liegt im Rahmen der Erfindung, dass die Anschlusseinheiten in einem Bereich bzw. Bereichen eine Wandung des Kunststoffbehälters durchgreifen, der bzw. die während des Umwickelns des Kunststoffbehälters mit der Verstärkungsschicht von einem Wickeldorn gehalten und vorzugsweise verstärkungsschichtfrei ist bzw. sind. Zweckmäßigerweise ist eine Anschlusseinheit als Be- und Entladeeinheit ausgebildet. Gemäß einer besonders bevorzugten Ausführungsform erstreckt sich ein Mantelrohr einer kopfteilseitigen Anschlusseinheit durch die Wandung des Kopfteils. Vorteilhafterweise ist in dem Mantelrohr ein Innenrohr angeordnet, das außerhalb des Warmwasserspeichers aus dem Mantelrohr herausgeführt ist. Es empfiehlt sich, dass die fußteilseitige Anschlusseinheit in dem Fußteil einen Fußablauf aufweist, durch den in einer besonders bevorzugten Ausführungsform ein in den Kunststoffbehälter hineinragender Fußzulauf eingeführt ist. Es hat sich bewährt, dass das Mantelrohr und das Innenrohr bzw. der Fußablauf und der Fußzulauf thermisch entkoppelt sind.

Den Warmwasserspeichern ist jeweils über das Mantelrohr, das Innenrohr, den Fußablauf oder den Fußzulauf erwärmtes Wasser zuführbar und/oder entnehmbar. Grundsätzlich ist es möglich, dass einem Warmwasserspeicher kopfteilseitig und fußteilseitig möglicherweise gleichzeitig kaltes Wasser und/oder erwärmtes Wasser zugeführt und/oder entnommen wird. Gemäß einer Ausführungsform ist es möglich, dass die Anschlusseinheiten axial oder radial orientiert sind. Zweckmäßigerweise sind die Anschlusseinheiten in den Isoliermantel integriert.

Es hat sich bewährt, dass die Anschlusseinheiten mit der Maßgabe ausgelegt sind, dass das in die Warmwasserspeicher geförderte warme Wasser in einer Mehrzahl von Schichten in den jeweiligen Warmwasserspeicher einbringbar ist, wobei die Schichten unterschiedliche Temperaturen aufweisen. Weiterhin ist es möglich, dass eine Beladung eines Warmwasserspeichers mit der Maßgabe erfolgt, dass das in dem Warmwasserspeicher aufgenommene Wasser ein einheitliches Temperaturniveau aufweist.

Zweckmäßigerweise weist das Warmwassersystem lediglich zwei und empfohlenermaßen drei Warmwasserspeicher mit vorzugsweise verschiedenen Speichervolumina auf. Es ist möglich, dass die Warmwasserspeicher mit der Regeleinheit mit der Maßgabe verbunden sind, dass die Warmwasserspeicher in Reihe und/oder parallel schaltbar sind. Dass die Warmwasserspeicher parallel schaltbar sind, meint im Rahmen der Erfindung, dass zumindest zwei Warmwasserspeichern gleichzeitig über das kopfteilseitige Anschlusselement und/oder fußteilseitige Anschlusselement erwärmtes Wasser zuführbar und/ oder entnehmbar ist. Grundsätzlich ist es möglich, dass allen in dem Warmwassersystem angeordneten Warmwasserspeichern simultan erwärmtes Wasser vorzugsweise mit der Fördereinrichtung zugeführt bzw. entnommen wird.

Empfohlenermaßen ist das Warmwassersystem an ein Trinkwassersystem und/oder Heizungssystem anschließbar. Es ist möglich, dass das Warmwassersystem mit der Maßgabe ausgelegt ist, dass zumindest ein Warmwasserspeicher an das Trinkwassersystem zur Bereitstellung von erwärmtem Trinkwasser und/oder Brauchwasser angeschlossen ist. Der an das Trinkwassersystem bzw. an einen Wärmetauscher des Trinkwassersystems angeschlossene Warmwasserspeicher ist zweckmäßigerweise ausschließlich an das Trinkwassersystem angeschlossen. Möglicherweise ist der Warmwasserspeicher für das Trinkwassersystem in dem Wärmemodul angeordnet. Gemäß einer weiteren Ausführungsform ist zumindest ein weiterer Warmwasserspeicher des Warmwassersystems bevorzugt ausschließlich an das Heizungssystem bzw. an einen Wärmetauscher des Heizungssystems angeschlossen. Empfohlenermaßen weisen die Wärmespeicher unterschiedliche Speichervolumina auf. Es ist möglich, dass der Trinkwasserspeicher bzw. der Wärmespeicher für das Trinkwassersystem ein geringeres Speichervolumen als der Heizungsspeicher bzw. der Wärmespeicher für das Heizungssystem aufweist. Grundsätzlich ist der Einsatz von Heizungsspeichern bis zu einem Volumen von 500 I bzw. ungefähr 500 I möglich. Es ist möglich, dass in dem Wärmemodul zwei Wärmetauscher angeordnet sind, wobei der Wärmetauscher des Trinkwassersystems ausschließlich zur Erwärmung des Trinkwassers und der Wärmetauscher des Heizungssystems ausschließlich zur Erwärmung von Wasser für das Heizungssystem einsetzbar ist bzw. eingesetzt wird. Vorzugsweise ist das Trinkwassersystem von dem Heizungssystem getrennt. Mit anderen Worten kann kein Wasser aus dem Heizungssystem in das Trinkwassersystem und kein Wasser aus dem Trinkwassersystem in das Heizungssystem strömen.

Es hat sich bewährt, dass das Wärmemodul und die Speichermodule identisch bzw. ungefähr identische Abmessungen aufweisen. Gemäß einer bevorzugten Ausführungsform sind benachbarte Oberflächen des Wärmemoduls und der Speichermodule fluchtend ausgerichtet und bilden gemeinsame, ebene Oberflächen aus.

Zweckmäßigerweise ist das Gehäuse mit einer Ummantelung versehen. Es liegt im Rahmen der Erfindung, dass zumindest die Isoliermäntel der Wärmemodule mit Fixierungselementen ausgestattet sind, an welche Fixierungselemente bevorzugt die Ummantelung bzw. eine einheitliche Verkleidung anbringbar ist. Gemäß einer bevorzugten Ausführungsform weist die Ummantelung ein einheitliches Erscheinungsbild auf. Weiterhin hat es sich bewährt, dass das vorzugsweise quaderförmige Gehäuse eine Tiefe von maximal 800 mm und bevorzugt von maximal 600 mm aufweist.

Der Erfindung liegt die Erkenntnis zugrunde, dass sich ein erfindungsgemäßes, modulares Warmwassersystem durch einen optimalen Wirkungsgrad bezüglich der Energieeffizienz und Hygiene auszeichnet. Dadurch, dass den Wärmespeichern erwärmtes Wasser unterschiedlicher Temperatur unabhängig voneinander zuführbar ist, kann in den Wärmespeichern für spezifische Anwendungen vorgesehenes, erwärmtes Wasser vorrätig gehalten werden. So ist es beispielsweise möglich, in einem ersten Wärmespeicher erwärmtes Wasser mit einer Temperatur vorrätig zu halten, die unter der für erwärmtes Brauchwasser vorgeschriebenen Minimaltemperatur liegt. Ein zwingendes Anheben des Temperaturniveaus mit der Maßgabe, dass hygienische Probleme zuverlässig ausgeschlossen werden, kann daher vermieden werden, da eine Entkopplung des Trinkwassers von Heizungswasser bei dem erfindungsgemäßen Warmwassersystem unkritisch ist. Weiterhin zeichnet sich das erfindungsgemäße Warmwassersystem durch eine optimale Flexibilität aus, da die vorrätig gehaltenen Warmwassermengen problemlos an einen bestehenden Bedarf anpassbar ist. Dies erfolgt durch ein Hinzufügen bzw. Entfernen von Warmwasserspeichern. Dabei kommt dem modularen Aufbau eine besondere Bedeutung zu, der die Verwendung von standardisierten Installationseinheiten ermöglicht und eine kostengünstige Verwirklichung eines erfindungsgemäßen Warmwassersystems gewährleistet. Das Warmwassersystem zeichnet sich also ergänzend durch eine hohe Wirtschaftlichkeit aus.

Weiterhin liegt der Erfindung die Erkenntnis zugrunde, dass durch die Standardabmessungen aufweisenden einzelnen Module eine unkritische Montage auch in Räumen möglich ist, die nicht als Keller- und/oder Abstellräume eingesetzt werden sollen. Selbst eine Integration eines erfindungsgemäßen Warmwassersystems in Wohnräume ist unkritisch. Dabei kommt der erfindungsgemäßen Ummantelung eine besondere Bedeutung zu, die dem Warmwassersystem eine zusätzliche Stabilisierung zukommen lässt und zudem dem Warmwassersystem ein einheitliches, attraktives Erscheinungsbild verleiht. Das einheitliche, attraktive Erscheinungsbild ist insbesondere durch die fluchtende Front der Modulgehäuse (Speichermodule, Wärmemodul) gegeben. Diese Bauweise ist auch dann bevorzugt eingehalten, wenn Module mit unterschiedlicher Tiefe miteinander kombiniert werden.

Die Attraktivität des Erscheinungsbildes ist durch gleiche Designmerkmale gegeben, die in Form einer auf die Module aufgebrachten Verkleidung dargestellt werden. Ein rückseitiger Freiraum des Warmwassersystems zur Wand hin aufgrund unterschiedlicher Tiefen der Speichermodule und/oder des Wärmemoduls kann als weiterer Installationsraum für ergänzende Systemkomponenten genutzt werden.

Nachfolgend wird die Erfindung anhand einer lediglich ein Ausführungsbeispiel darstellenden Zeichnung detailliert erläutert. Es zeigen in schematischer Ansicht:
- Fig. 1: eine Draufsicht auf ein erfindungsgemäßes Warmwassersystem,
- Fig. 2: eine perspektivische Ansicht eines erfindungsemäßen Warmwassersystems mit drei Warmwasserspeichern,
- Fig. 3: eine perspektivische Explosionsansicht eines erfindungsgemäßen Warmwasserspeichers,
- Fig. 4A und 4B: einen Schnitt durch ein schematisch dargestelltes Kopfteil eines erfindungsgemäßen Warmwasserspeichers und
- Fig. 5A und 5B: einen Schnitt durch ein schematisch dargestelltes Fußteil eines erfindungsgemäßen Warmwasserspeichers.

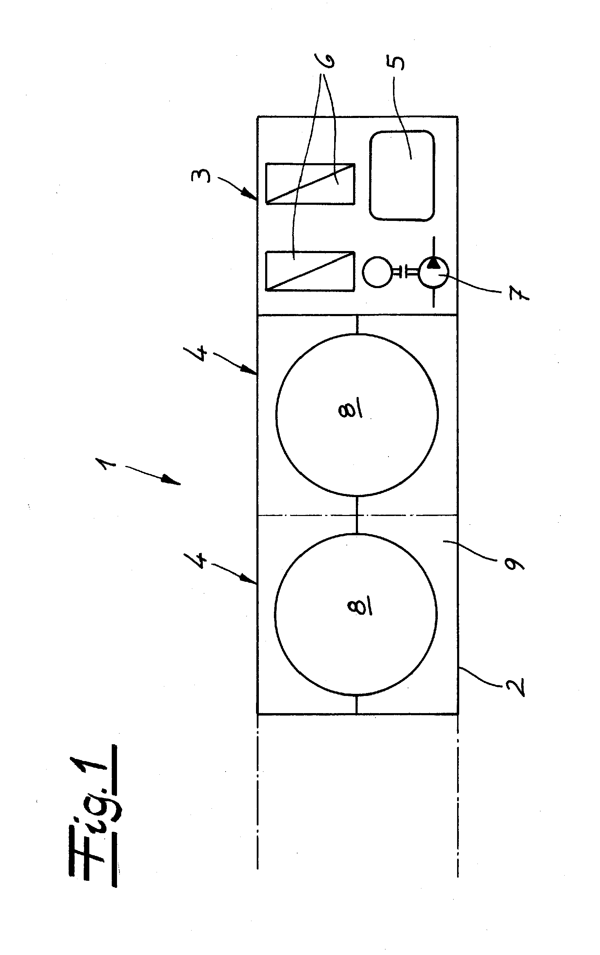

In Fig. 1 ist ein modulares Warmwassersystem 1 dargestellt, das mit einem Gehäuse 2 versehen ist. In dem Gehäuse 2 sind neben einem Wärmemodul 3 zwei Speichermodule 4 angeordnet. In Fig. 1 ist nicht dargestellt, dass in dem Wärmemodul 3 eine Wärmequelle zum Erwärmen von Wasser angeordnet ist. Weiterhin ist in der Fig. 1 gezeigt, dass in dem Wärmemodul 3 eine Regeleinheit 5 sowie ein Wärmetauscher 6 und eine Pumpeneinheit 7 angeordnet sind. Vorzugsweise und gemäß dem Ausführungsbeispiel nach Fig. 1 ist in den Speichermodulen 4 jeweils ein Warmwasserspeicher 8 angeordnet. Weiterhin geht aus der Fig. 1 hervor, dass die Warmwasserspeicher 8 von einem Isoliermantel 9 umgeben sind bzw. in den Isoliermantel 9 eingebettet sind. In den Figuren ist nicht dargestellt, dass die Wärmespeicher 8 als Kunststoffbehälter mit einer aufgewickelten Verstärkungsschicht ausgebildet sind. In der Fig. 1 ist darüber hinaus strichpunktiert angedeutet, dass das Warmwassersystem 1 gemäß Fig. 1 mit weiteren Warmwasserspeichern ausgestattet werden kann.

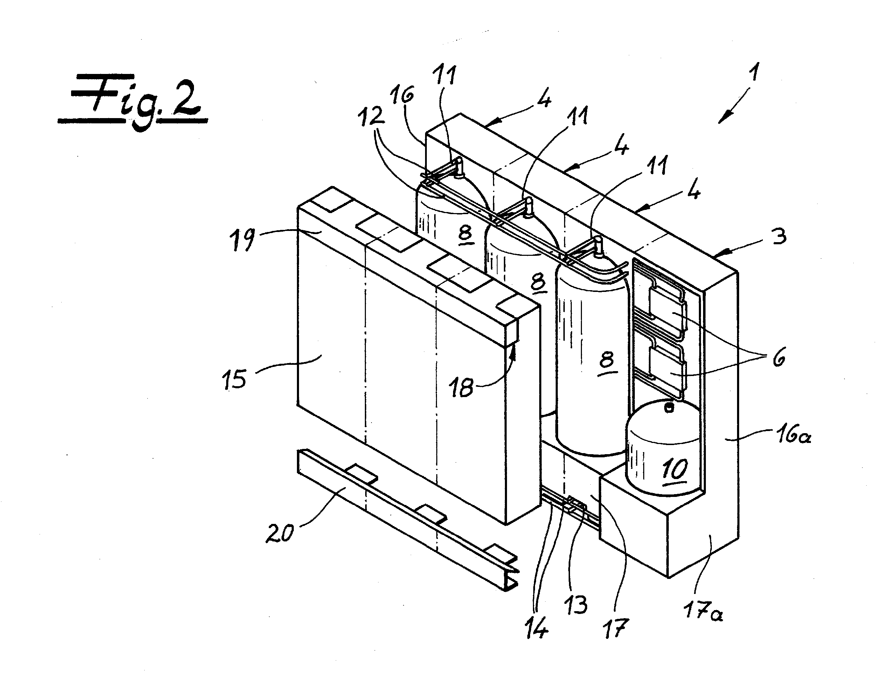

In Fig. 2 ist ein Warmwassersystem 1 dargestellt, das drei Speichermodule 4 aufweist, wobei jedes Speichermodul 4 einen Warmwasserspeicher 8 enthält. Weiterhin ist in Fig. 2 gezeigt, dass das Warmwassersystem 1 eine Wärmequelle aufweist, die gemäß dem Ausführungsbeispiel und Fig. 2 als Wärmeerzeuger 10 ausgebildet ist. Weiterhin ist in Fig. 2 dargestellt, dass der Wärmetauscher 6 oberhalb des Wärmeerzeugers 10 in dem Wärmemodul 3 angeordnet ist.

Die Wärmespeicher 8 weisen gemäß Fig. 2 jeweils eine kopfteilseitige Anschlusseinheit 11 auf, die mit einem kopfteilseitigen Leitungssystem 12 verbunden sind. Ebenso ist in Fig. 2 angedeutet, dass die Warmwasserspeicher 8 fußteilseitige Anschlusseinheiten 13 aufweisen, die an ein fußteilseitiges Leitungssystem 14 angeschlossen sind. Die Anschlusseinheiten 11, 13 sowie die Leitungssysteme 12, 14 sind weiter unten detailliert erläutert. In Fig. 2 ist weiterhin gezeigt, dass der Isoliermantel 9 aus einem vorderen Mantelteil 15 und einem hinteren Mantelteil 16 gefertigt ist. Das fordere Mantelteil 15 und das hintere Mantelteil 16 liegen im montierten, nicht dargestellten Zustand mit der Maßgabe an den Warmwasserspeichern 8 an, dass die Anschlusseinheiten 11, 13 durch in Fig. 2 nicht dargestellte Ausnehmungen aus dem vorderen Mantelteil 15 herausgeführt sind. Gemäß einer bevorzugten Ausführungsform und Fig. 2 weist der Isoliermantel fernerhin einen Mantelsockel 17 auf, der einen unteren Abschnitt der Wärmespeicher 8 umgibt und aus dem die fußteilseitigen Anschlusseinheiten 13 herausgeführt sind.

Eine obere Kante des vorderen Mantelteils 15 weist eine Falz 18 auf, in die die kopfteilseitigen Anschlusseinheiten 11 hineinragen und an das kopfteilseitige Leitungssystem 12 angeschlossen sind. Das kopfteilseitige Leitungssystem 12 verläuft ebenfalls in dieser Falz 18. Das in der Falz 18 angeordnete Leitungssystem 12 sowie das fußteilseitige Leitungssystem 14 sind mit jeweils einem kopfteilseitigen Abdeckelement 19 sowie einem fußteilseitigen Abdeckelement 20 verkleidet. Gemäß einer besonders bevorzugten Ausführungsform und der Darstellung gemäß Fig. 2 bilden das hintere Mantelteil 16 sowie das vordere Mantelteil 15 mit den Abdeckelementen 19, 20 ein drei Wärmemodule 3 umfassendes Aggregat.

Darüber hinaus ist in Fig. 2 dargestellt, dass der Wärmeerzeuger 10 in einem Sockelelement 17a aufgenommen ist. An das Sockelelement 17a ist eine Rückwand 16a angeschlossen, die gemäß Fig. 2 fluchtend zu einer hinteren Oberfläche des hinteren Mantelteils 16 ausgerichtet ist. Die Rückwand 16a, das Sockelelement 17a und ein nicht dargestelltes Frontelement bilden ein quaderförmiges Wärmemodulgehäuse.

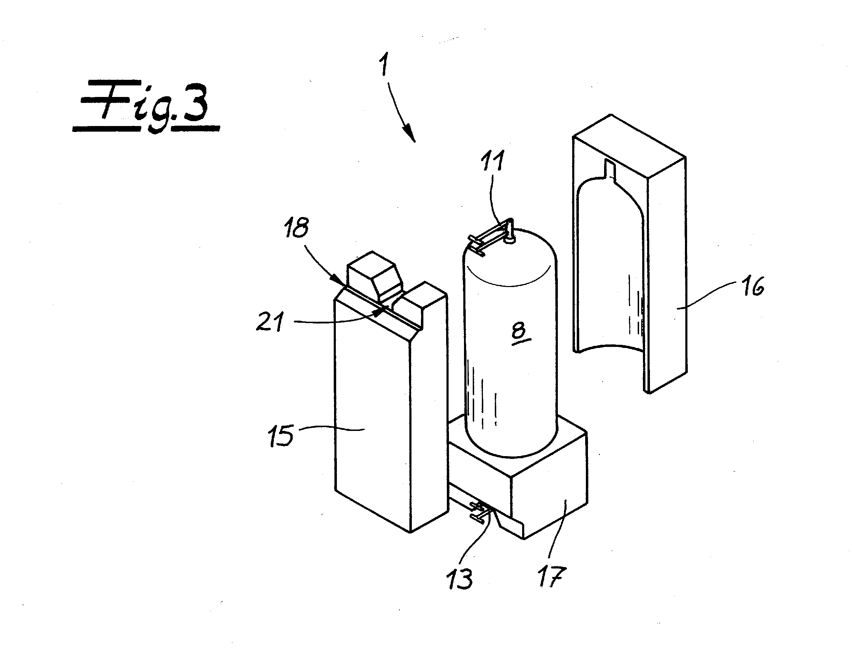

In Fig. 3 sind der besseren Übersicht halber die einzelnen Bestandteile des Isoliermantels 9 eines Wärmemoduls 3 noch einmal dargestellt. Der Warmwasserspeicher 8 ist mit dem unteren Abschnitt in den Mantelsockel 17 eingebettet, wobei die fußteilseitige Anschlusseinheit 13 aus dem Mantelsockel 17 herausgeführt ist. An einer übrigen Oberfläche des Warmwasserspeichers 8 liegen dann im nicht dargestellten, montiertem Zustand das hintere Mantelteil 16 und das vordere Mantelteil 15 an. Die kopfteilseitige Anschlusseinheit 11 ist aus einer in dem vorderen Mantelteil 15 angeordneten Vertiefung 21 durch eine Wandung des vorderen Mantelteils 15 geführt, so dass eine in Fig. 3 nicht dargestellte Anschlussarmatur der kopfteilseitigen Anschlusseinheit 11 in der Falz 18 des vorderen Mantelteils 15 angeordnet ist. Diese Anschlussarmatur ist dann an das kopfteilseitiges Leitungssystem 12 anschließbar. Nach erfolgtem Anschluss der kopfteilseitigen Anschlusseinheit 11 an das kopfteilseitige Leitungssystem 12 wird die Falz 18 sowie die Vertiefung 21 mit dem kopfteilseitigen Abdeckelement 19 zur Verbesserung der Wärmedämmung abgedeckt. Ebenso wird die fußteilseitige Anschlusseinheit 13 an das fußteilseitige Leitungssystem 14, das in Fig. 3 nicht dargestellt ist, angeschlossen und mit dem fußteilseitigen Abdeckelement 20 zur Wärmedämmung abgedeckt.

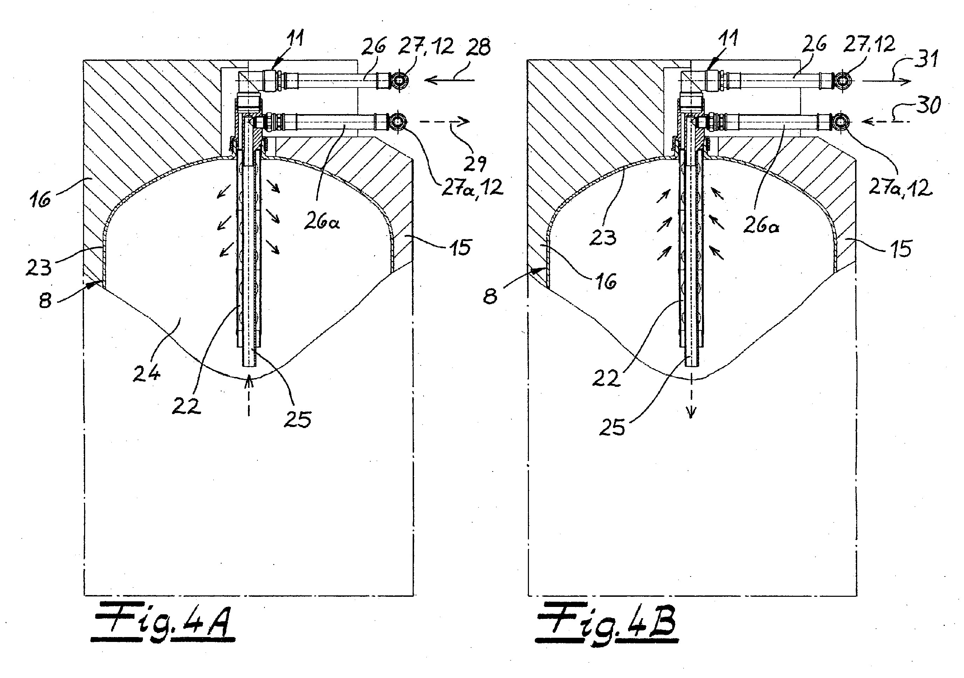

In den Fig. 4A und 4B ist schematisch die Beladung eines Warmwasserspeichers 8 mit erwärmtem Brauchwasser und die Entnahme von erwärmtem Brauchwasser aus dem Warmwasserspeicher 8 dargestellt. In den Fig. 4A und 4B sind kopfteilseitige Anschlusseinheiten 11 dargestellt. Diese durchgreifen mit einem Mantelrohr 22 eine Wandung 23 des Warmwasserspeichers 8 und erstrecken sich in einen Innenraum 24 des Warmwasserspeichers 8. Weiterhin ist in den Fig. 4A und 4B gezeigt, dass in dem Mantelrohr 22 ein Innenrohr 25 angeordnet ist, dessen unteres Ende weiter in den Innenraum 24 hineinragt als das Mantelrohr 22. Außerhalb des Warmwasserspeichers 8 ist das Innenrohr 25 aus dem Mantelrohr 22 hinausgeführt. An das Mantelrohr 22 und an das Innenrohr 25 sind Anschlussstutzen 26, 26a angeschlossen, wobei der Anschlussstutzen 26 an eine obere Kopfleitung 27 und der Anschlussstutzen 26a an eine untere Kopfleitung 27a angeschlossen ist. Die obere Kopfleitung 27 und die untere Kopfleitung 27a bilden das kopfteilseitige Leitungssystem 12, das an die Regeleinheit 5, den Wärmetauscher 6 und die Pumpeinheit 7 angeschlossen ist. Gemäß einer bevorzugten Ausführungsform ist über die obere Kopfleitung 27 und über das Mantelrohr 22 dem Innenraum 25 erwärmtes Wasser zuführbar, was durch den Pfeil 28 in Fig. 4A angedeutet ist. Gemäß Fig. 4A wird abgekühltes bzw. kälteres Wasser durch das Innenrohr 25 und die untere Kopfleitung 27a aus dem Innenraum 25 gepresst. Dies ist durch den Pfeil 29 angedeutet. Auf diese Weise ist eine Befüllung des Warmwasserspeichers 8 mit erwärmtem Wasser möglich.

Gemäß Fig. 4B wird dem Warmwasserspeicher 8 in der Richtung des Pfeils 30 kaltes Wasser durch die untere Kopfleitung 27a und das Innenrohr 25 mit der Maßgabe zugeführt, dass aufgrund der geringeren Dichte nach oben verdrängtes erwärmtes Wasser durch nicht dargestellte Ausnehmungen bzw. Öffnungen in dem Mantelrohr 22 und die obere Kopfleitung 27 aus dem Innenraum 25 des Warmwasserspeichers 8, verdeutlicht durch den Pfeil 31, gepresst wird. Nicht dargestellt ist, dass das dem Warmwasserspeicher 8 entnommene Wasser einem Verbraucher oder einer Heizungsanlage zuführbar ist. Weiterhin ist nicht dargestellt, dass dem Warmwasserspeicher 8 entnommenes Wasser dem Wärmeerzeuger 10 mit der Pumpeinheit 7 zuführbar und in den Warmwasserspeicher 8 zurückführbar ist.

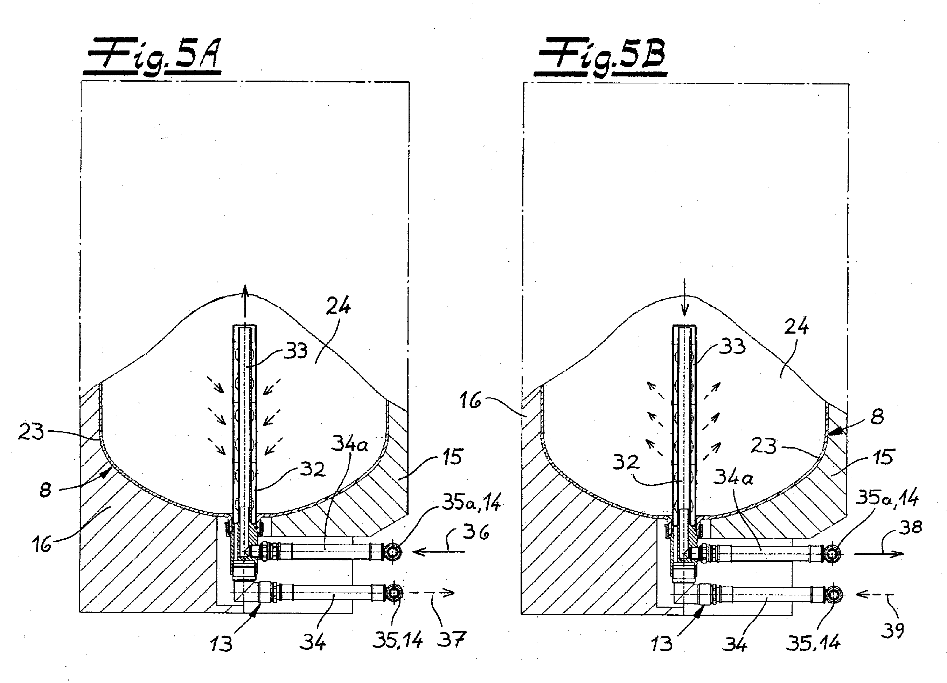

In Fig. 5A ist die Beladung des Warmwasserspeichers 8 mit erwärmtem Wasser für den Heizungsbereich dargestellt. Fig. 5B betrifft die Entnahme von erwärmtem Wasser zum Heizen. In Fig. 5A ist die fußteilseitige Anschlusseinheit 13 dargestellt, die über einen Fußablauf 32 an die Wandung 23 des Warmwasserspeichers 8 angeschlossen ist. Durch den Fußablauf 32 ist ein Fußzulauf 33 geführt, der in den Innenraum 24 des Warmwasserspeichers 8 mündet. Außerhalb des Warmwasserspeichers 8 ist der Fußzulauf 33 aus dem Fußablauf 32 herausgeführt. Der Fußablauf 32 ist mit einem unteren Übergangsstück 34 an eine untere Fußleitung 35 angeschlossen. Weiterhin ist in den Fig. 5A, 5B dargestellt, dass der Fußzulauf 33 über ein oberes Übergangsstück 34a an eine obere Fußleitung 35a angeschlossen ist. Die untere Fußleitung 35 und die obere Fußleitung 35a bilden das fußteilseitige Leitungssystem 14. Gemäß Fig. 5A ist dem Innenraum 24 über den Fußzulauf 33 erwärmtes Wasser zuführbar, wobei der Fußzulauf 33 in den Innenraum 24 des Warmwasserspeichers 8 mündet. Infolge dessen ist kälteres, schwereres Wasser aus dem Fußablauf 32 auspressbar und durch das untere Übergangsstück 34 zu der unteren Fußleitung 35 förderbar. Die Zuführung des erwärmten Wassers ist in Fig. 5A mit dem Pfeil 36, die Ausleitung des kälteren Wassers aus dem Innenraum 24 des Warmwasserspeichers 8 mit dem Pfeil 37 gekennzeichnet.

Fig. 5B entspricht im Wesentlichen der Fig. 5A, jedoch ist die Strömungsrichtung des Wassers umgekehrt. Gemäß Pfeil 39 wird Wasser durch die untere Fußleitung 35 und das untere Übergangsstück 34 in den Innenraum 24 des Warmwasserspeichers 8 gepresst, so dass warmes, eine geringere Dichte aufweisendes Wasser in den Fußzulaufs 33 gepresst und durch das obere Übergangsstück 34a zu der oberen Fußleitung 35a gefördert wird. In Fig. 5A und 5B ist nicht dargestellt, dass das gemäß den Pfeilen 37, 38 aus dem Wärmespeicher 8 strömende Wasser einer Heizungsanlage und/oder dem Wärmeerzeuger 10 zuführbar ist.

## Patentansprüche

1. Modulares Warmwassersystem, insbesondere Warmwassersystem zum Erwärmen und Speichern von Wasser in einem Gebäude, wobei das Warmwassersystem (1) ein Gehäuse (2) aufweist, in welchem Gehäuse (2) zumindest ein Wärmemodul (3) und zumindest zwei Speichermodule (4) aufgenommen sind, wobei das Wärmemodul (3) eine Wärmequelle zum Erwärmen des Wassers und zumindest eine Regeleinheit (5) enthält, wobei die Speichermodule (4) jeweils einen Warmwasserspeicher (8) aufweisen, wobei in den Warmwasserspeichern (8) unabhängig voneinander und vorzugsweise bei verschiedenen Temperaturen das von der Wärmequelle erwärmte Wasser speicherbar ist, wobei das Warmwassersystem (1) ein Rohrleitungssystem aufweist, mit dem die Regeleinheit (5), die Wärmequelle und die Warmwasserspeicher (8) miteinander verbunden sind und wobei die Regeleinheit (5) derart steuerbar ist, dass den Warmwasserspeichern (8) durch das Rohrleitungssystem unabhängig voneinander das erwärmte Wasser zuführbar und/oder entnehmbar ist.

2. Warmwassersystem nach Anspruch 1, wobei das Wärmemodul (3) eine Fördereinrichtung aufweist, mit der Wasser zu den Warmwasserspeichern (8) förderbar ist und/oder den Warmwasserspeichern (8) entnehmbar ist.

3. Warmwassersystem nach einem der Ansprüche 1 oder 2, wobei das Wärmemodul (3) zumindest einen Wärmetauscher (6) aufweist, mit dem Wärme von in einem Trinkwasserspeicher gespeicherten, erwärmten Wasser auf Trinkwasser übertragbar ist.

4. Warmwassersystem nach einem der Ansprüche 1 bis 3, wobei das Wärmemodul einen Wärmeerzeuger (10) aufweist.

5. Warmwassersystem nach einem der Ansprüche 1 bis 4, wobei die Speichermodule (4) jeweils einen dem jeweiligen Wärmespeicher (8) zugeordneten Isoliermantel (9) aufweisen, wobei das Wärmemodul (3) in einem Wärmemodulgehäuse angeordnet ist und wobei der Isoliermantel (9) und das Wärmemodulgehäuse zur Ausbildung des Gehäuses (2) miteinander verbunden sind.

6. Warmwassersystem nach Anspruch 5, wobei der Isoliermantel (9) aus einem aufgeschäumten Kunststoff und bevorzugt aus expandiertem Polystyrolschaum gefertigt ist.

7. Warmwassersystem nach einem der Ansprüche 1 bis 6, wobei die Warmwasserspeicher (8) als vorzugsweise rotationssymmetrische Kunststoffbehälter ausgebildet sind und wobei die Kunststoffbehälter eine Verstärkungsschicht aufweisen.

8. Warmwassersystem nach Anspruch 7, wobei die Verstärkungsschicht vorzugsweise durch Umwickeln bzw. Umhüllen der Warmwasserspeicher (8) mit einem Faserverbundmaterial erzeugt ist.

9. Warmwassersystem nach einem der Ansprüche 1 bis 8, wobei die Warmwasserspeicher (8) jeweils zumindest eine Anschlusseinheit (11) und vorzugsweise zwei Anschlusseinheiten (11, 13) aufweisen.

10. Warmwassersystem nach Anspruch 9, wobei die Warmwasserspeicher (8) jeweils eine kopfteilseitige Anschlusseinheit (11) und eine fußteilseitige Anschlusseinheit (13) aufweisen.

11. Warmwassersystem nach einem der Ansprüche 1 bis 10, wobei ein Warmwasserspeicher für Trinkwasser und zwei Warmwasserspeicher für Heizungswasser vorgesehen sind, wobei die Warmwasserspeicher für das Heizungswasser jeweils ein größeres Speichervolumen aufweisen als ein Speichervolumen des Warmwasserspeichers für das Trinkwasser.

12. Warmwassersystem nach einem der Ansprüche 1 bis 11, wobei das Wärmemodul (3) und die Speichermodule (4) identische bzw. ungefähr identische Abmessungen aufweisen.

13. Warmwassersystem nach einem der Ansprüche 1 bis 12, wobei das Warmwassersystem (1) an ein Trinkwassersystem und/oder Heizungssystem anschließbar ist.

14. Warmwassersystem nach einem der Ansprüche 1 bis 13, wobei das Wärmemodul und die Speichermodule benachbart zueinander bzw. in räumlicher Nähe zueinander angeordnet und miteinander verbunden sind.

15. Warmwassersystem nach einem der Ansprüche 1 bis 14, wobei das Gehäuse (2) mit einer Verkleidung versehen ist.

## Geänderte Patentansprüche

### Geänderte Patentansprüche gemäss Regel 137(2) EPÜ.

**1.** Modulares Warmwassersystem, insbesondere Warmwassersystem zum Erwärmen und Speichern von Wasser in einem Gebäude, wobei das Warmwassersystem ein Gehäuse aufweist, in welchem Gehäuse zumindest ein Wärmemodul und zumindest zwei Speichermodule aufgenommen sind, wobei das Wärmemodul eine Wärmequelle zum Erwärmen des Wassers und zumindest eine Regeleinheit enthält, wobei die Speichermodule jeweils einen Warmwasserspeicher aufweisen, wobei in den Warmwasserspeichern unabhängig voneinander das von der Wärmequelle erwärmte Wasser speicherbar ist, wobei das Warmwassersystem ein Rohrleitungssystem aufweist, mit dem die Regeleinheit, die Wärmequelle und die Warmwasserspeicher miteinander verbunden sind und wobei die Regeleinheit derart steuerbar ist, dass den Warmwasserspeichern durch das Rohrleitungssystem unabhängig voneinander das erwärmte Wasser zuführbar und/oder entnehmbar ist,
**dadurch gekennzeichnet,**
**dass** die Warmwasserspeicher heizelementfrei ausgebildet sind,
**dass** in einem Warmwasserspeicher erwärmtes Trinkwasser oder erwärmtes Wasser zum Erwärmen von Trinkwasser und in einem anderen Warmwasserspeicher erwärmtes Heizungswasser gespeichert ist und
**dass** das von der Wärmequelle erwärmte Wasser in den Warmwasserspeichern bei verschiedenen Temperaturen speicherbar ist.
